# EUROPEAN PATENT APPLICATION

(11) **EP 1 239 413 A2**
(43) Date of publication of application: **11.09.2002**
(21) Application number: 02251646.2
(22) Date of filing: 08.03.2002
(51) Int. Cl.: G06T 1/00

(54) **Authentication using a digital watermark**

(30) Priority: 08.03.2001 US 801445
(71) Applicant: Spectra Systems Corporation, Providence, RI 02903 (US)
(72) Inventor: Lawandy, Nabil M., North Kingstown, Rhode Island 02852 (US); Tillotson, Scott A., North Kingstown, Rhode Island 02852 (US)
(74) Representative: Read, Matthew Charles

(57) **Abstract**

A method and apparatus for identifying an object include encoding physical attributes of an object where the encoded information is utilized as at least one element for composing a digital watermark for the object. In another embodiment the physical attributes of an object are utilized as a key for accessing information included in a digital watermark for the object. In a further embodiment, a digital watermark is incorporated into a bar code. As another aspect of this embodiment, information maybe encoded into the digital watermark of the barcode and may be decoded or otherwise retrieved by the use of a key. The digitally watermarked bar code may function in a conventional manner or may also include a "pass key" to allow reading of the bar code itself.

## Description

### FIELD OF THE INVENTION:

This invention relates to a method and apparatus for providing reliable and repeatable identification and authentication of an object by using a digital watermark.

### BACKGROUND OF THE INVENTION:

A known security device for verifying an item's authenticity is a watermark. Watermarks or signatures are typically produced by utilizing semantic information of the item to be protected, for example, alphanumeric characters, physical features, etc. or other related information (e.g. ownership information). These signatures or watermarks are typically kept with, or incorporated into the protected item. For example, a watermark may be printed within the substrate of a negotiable instrument which includes information regarding the value and the originator of the instrument.
Various digital watermarking techniques are known for both still and video images.

Reference in this regard may be had to Hartung et al., "Digital Watermarking of Raw and Compressed Video", Systems for Video Communication, October 1996, pp. 205-213 and Hartung et al., "Watermarking of MPEG-2 Encoded Video Without Decoding and Re-encoding", Proceedings of SPIE 3020, Multimedia Computing and Networking 97 (MMCN 97), February 1997.

Some of the techniques discussed in these papers include separately coding the image and a watermark image using a pseudo random number generator and a discrete cosine transform (DCT) to form coded blocks, one of the image to be watermarked and the other of the watermark itself. The DCT coefficients representing the coded watermark block and the coded image block are then added together to form a combined block thus digitally watermarking the image.

Reference may also be had to US Patent No. 6,037,984, entitled "Method and Apparatus for Embedding a Watermark into a Digital Image or Image Sequence," by Isnardi et al., issued March 14, 2000. This patent discloses watermarking an image or sequence of images using a conventional DCT unit and quantizer. The patent discloses generating an array of quantized DCT coefficients and watermarking the array by selecting certain ones of the DCT coefficients and replacing them with zero values. The masked array is further processed by a watermark inserter that replaces the zero valued coefficients with predefined watermark coefficients to form a watermarked array of DCT coefficients, that is, a watermarked image.

It is also well known that valuable items, for example, negotiable instruments, art work, etc. are susceptible to theft and counterfeiting. With regard to documents, the advancement of color copier technology has made it fairly easy to create a color copy of any document, including currency, using commonly available equipment.

In an effort to stem widespread counterfeiting of currency, many countries, including the United States, now include a watermark, a security fiber, or both in their paper based currency. These security features give the receiver a means to verify a particular note's authenticity. The security fiber is embedded in the paper on which the money is printed, and may include a human readable (albeit small) description of the currency imprinted on its surface.

In addition to fibers, it is known to utilize planchets and particles to authenticate items. These types of authentication mechanisms may be color based, that is, they may have a characteristic color, they may diffract light, or they may fluoresce when subjected to an excitation, for example IR, optical, or UV radiation.

The authentication materials and devices mentioned above, which may also be referred to as taggants, including fibers, planchets and particles, are typically produced to a specific size and shape that is appropriate for the object with which they will be associated. The taggants are then incorporated into, or otherwise made a part of the object, thus becoming one of the physical characteristics of the object.

Radio frequency and magnetic materials and devices may also be used as taggants. Some examples of these types of taggants include radio frequency resonators, magnetic fibers and magnetic printing inks.

Reference in this regard may be had to US Patent No. 5,891,240, entitled "Radio Frequency Automatic Identification System," by M. Greene, issued April 6, 1999, and to US Patent No. 6,146,773, entitled "Security Document and Method for Producing It," by W. Kaule, issued November 14, 2000.

A need exists to provide enhanced identification, authentication and encoding capabilities utilizing a combination of physical characteristics of the item to be protected in combination with a digital watermark.

### SUMMARY OF THE INVENTION

The foregoing and other problems are overcome by methods and apparatus in accordance with embodiments of this invention.

A method and apparatus for identifying an object are disclosed wherein physical attributes of an object are encoded and the encoded information is utilized as at least one element for composing a digital watermark for the object.

In another embodiment the physical attributes of an object are utilized as a key for accessing information included in a digital watermark for the object.

In a further embodiment, a digital watermark is incorporated into a bar code. In this embodiment, the barcode is treated as an image and may be watermarked using techniques applicable to images. As another aspect of this embodiment, information may be encoded into the digital watermark of the barcode and may be decoded or otherwise retrieved by the use of a key. The digitally watermarked bar code may function in a conventional manner or may also include a "pass key" to allow reading of the bar code itself. If the digital watermark is not read, a properly designed terminal will not be permitted to read the bar code.

In a still further another embodiment, the physical attributes of the object may be utilized as at least one input of the barcode's digital watermark, and may also be used as a key to decode information that may be stored in the barcode's digital watermark.

### BRIEF DESCRIPTION OF THE DRAWINGS

The above set forth and other features of the invention are made more apparent in the ensuing Detailed Description of the Invention when read in conjunction with the attached Drawings, wherein:
Figure 1 shows a flow diagram demonstrating the use of the taggants and other information in the formation of a digitally watermarked image.
Figure 2A depicts fibers and a digital watermark incorporated in a substrate;
Figure 2B shows a cross section of the substrate of Figure 1;
Figure 3A shows a detailed view of a digitally watermarked barcode;
Figure 3B shows a substrate having a coding scheme made up of a number of straight fibers and a bent fiber embedded therein and a digitally watermarked bar code printed on the substrate;
Figure 4A depicts particles embedded in a type of flat goods and a digital watermark imprinted thereon;
Figure 4B shows a magnified cross sectional view of the flat good;
Figure 4C shows a magnified perspective view of a particle;
Figure 5 shows a substrate having a coding scheme made up of a number of fibers with different frequency characteristics and a smart card, a radio frequency identification device and a semiconductor device for storing a digital signature or watermark;
Figure 6 shows a photograph embodying identification and authentication schemes in accordance with the teachings of this invention.
Figure 7 shows a schematic diagram of a detection system to identify and authenticate items in accordance with the invention; and
Figure 8 shows a block diagram of a detector array that is part of the detection system.

### DETAILED DESCRIPTION OF THE INVENTION

The invention provides for the use of one or more physical characteristics or attributes of an object as at least one input for creating a digital watermark and/or as a key to access information included in a digital watermark.

The physical characteristics may be directly or indirectly observable. For example, the physical characteristics may include a visually measurable dimension of the object, or may be derived from one or more taggants. The physical characteristics derived from one or more taggants may include the specific size, shape, color, emission wavelength, loading factor or other physical characteristics or attributes of one or more taggants that have been incorporated into or are otherwise associated with the object.

As an example of a particular type of taggant, fibers can be extruded to have various diameters ranging from several microns to, for example, some tens of microns. In addition, fibers may be produced having a cross section that is other than circular, for example, triangular, rectangular, ellipsoidal, etc. Fibers may also be produced having specific lengths and may also be produced to have an essentially straight or a non-straight (e.g., curved) shape.

Planchets can be manufactured to have different, specific diameters and thicknesses, while particles can be produced, such as by precipitation, to have controlled size ranges and shapes.

In each of the foregoing examples various dyes can be used to impart a color and/or a characteristic emission wavelength when illuminated by light, such as UV light, or when otherwise irradiated.

Other taggants that may be used include radio frequency and/or magnetic materials. For example, crystals that resonate at particular frequencies may be incorporated into or made a part of a substrate. As another example, a layer of magnetic material may be dispersed throughout the substrate that exhibits a specific, measurable, magnetic field. As a further example, a magnetic ink may be used which may exhibit a particular magnetic field. It should be understood that the present invention is not limited to any particular taggant utilizing radio frequency or magnetic properties but may include any suitable taggant utilizing these properties.

In accordance with the teachings herein, by creating specific ranges of physical dimensions a coding scheme can be created. In the case of fibers, for example, the following measurably different diameter ranges (D) may be created, 1-5 microns, 10-15 microns, 20-25 microns, and 30-35 microns. As part of the same example, different lengths (L) can be used, e.g., 1.5mm, 3mm, and 5mm. Furthermore, one or more categories of shape (S) can be created, for example, straight or bent. Using these exemplaryphysical fiber attributes: three different lengths, four different diameters, and two different shapes, there are L^{(DS)} (3^{4*2}) or 6561 unique combinations of physical attributes that can be used for coding and authenticating.

The use of various concentrations or densities (loading factors) of the various fiber types adds even further unique combinations.

A similar coding can be accomplished using particles having controlled size distributions. Materials that maintain their dimensions, including hard polymer materials as well as phosphors, can be used to create powders having particles that are accurately sized. For example, if particles with four different mean radii are used in combination with five wavelength ranges of fluorescence, up to 4⁵, or 1024 codes can be created.

Particles are particularly well suited for coding products that retain some of the particles, such as textiles, porous materials, paper, etc. By applying various particle combinations on the product, or on, or in a substrate attached to the product, a post manufacturing code can be created. Although electrostatic attraction may cause these particles to be adequately retained, enhanced binding can be achieved using appropriate materials, for example, a mesh incorporated into the product or binding agents such as starches or hair spray types of products.

Additional coding combinations can be made by incorporating fluorescence emission or body color into the taggant. With UV excitation, for example, at least five unique wavelength categories or frequency ranges can be created. Combining these five different wavelength categories and three lengths yields LF, or 3⁵ combinations, or 243 codes. Even more codes are possible by combining other attributes, such as diameter and shape. For example, using four diameters and five frequency ranges yields D^{F} (4⁵), or 1024 codes.

In addition, the loading factors of various taggants can be employed as a further variable. For example, there may be a set of taggants having two members, the first comprised of red particles of 50 micron diameter and the second comprised of a red (or green, or blue, or yellow) particle having an 80 micron diameter. The first particles may be present with a loading factor of 20 per square centimeter, while the second particles may be present with a loading factor of 40 particles per square centimeter. By counting the numbers of particles per unit area of each type, one may determine the information encoded by the selected taggants. For example, a paper document having this particular set of taggants is identified as a first type of negotiable instrument, while another paper document having a different set of taggants (e.g., red particles of 25 micron diameter and 80 micron diameter with loading factors of 50 per square centimeter and 100 per square centimeter, respectively) is identified as a second type of negotiable security. Furthermore, one may verify the authenticity of the negotiable security by verifying that the expected set of taggants are actually present with the expected size ranges and loading factors.

As mentioned above, the coding information generated from the physical characteristics of the object is then used as at least one input for creating a digital watermark. The watermark itself may be created using any number of methods.

One example of such a method might include utilizing the coding information as a seed for a pseudo-random number generator where the random number is used as a hash, or some other one-way function for generating the digital watermark.

Another technique might include utilizing the coding information, the output of a pseudo-random number generator, and any other appropriate information as distinct inputs to an algorithm including a discrete cosine transform to form a digitally watermarked image.

In another embodiment, one or more of the various inputs to the digital watermarking algorithm may be used as a key to obtain information included in the digital watermark.

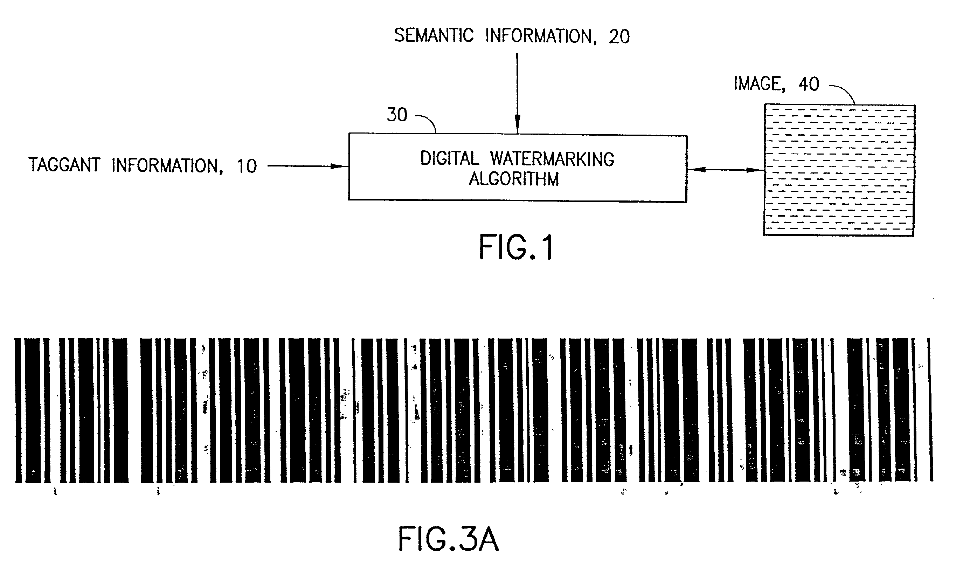

Figure 1 shows a flow diagram demonstrating the use of the taggants and other information in the formation of a digitally watermarked image.

In Figure 1, taggant information 10 and semantic information 20 are provided as inputs to a digital watermarking algorithm 30 which in turn generates a digital watermark that is incorporated into image 40. It should be understood that the taggant and/or semantic information may be used as a key, where the digital watermarking algorithm uses the key to decode or otherwise retrieve information encoded in the digital watermark.

Using the fluorescent emission example above, an unprinted document substrate may include a code that is derived from five unique wavelength categories of fluorescence and three fiber lengths yielding L^{F}, or 3⁵ combinations, or 243 codes. The particular code of this substrate then becomes one of a number of data inputs into a digital watermarking or digital signature algorithm that digitally watermarks or digitally signs the printed information to be placed on the substrate.

Thus, the coding information generated from the physical characteristics of the object is used for creating a digital watermark or signature that becomes part of the printed information on the same physical substrate. The result is a coupling of the physical substrate characteristics and the printed information, utilizing the derived code.

The digital watermark may be embodied as part of the protected item, for example, it may be printed on the object, or it may be included as part of a substrate of the object.

In another embodiment, the present invention includes the impregnation of a bar code symbology with a digital watermark. The barcode may be implemented using any suitable symbology including, without limitation, 3 of 9, 12 of 5, Code 128, UPC, 2-D, and 3-D symboligies. The watermark may be incorporated as a digitally embedded imprint in the bit pattern or noise of a digital image of the bar code. Known software technologies can be used to embed the digital watermark such that it is recoverable using software, or other automated or manual techniques. The digital watermark may also include additional information which may be decoded by utilizing a key to "unlock" data included in the watermark. The digital watermark, and the other information which may be embedded in the digital watermark, is robust to image deformations, rotations, copying, multiple renderings, conversions, and other manipulations.

Furthermore, the bar code encrypted with digitally watermarked information can be made to contain a pass key to allow reading of the bar code itself. If the digital watermark is not read, the properly designed terminal will not read the bar code.

As a further embodiment, the physical characteristics of the objected being protected could be encoded in a radio frequency identification device, or may be included as information in a semiconductor device, for example a memory device or other type of integrated circuit. The information in these devices may then be used as an input to a digital watermark and/or as a key to access information included in a digital watermark. These devices could be incorporated on, or into, a substrate, or could otherwise be associated with the object or item to be authenticated, identified, or protected.

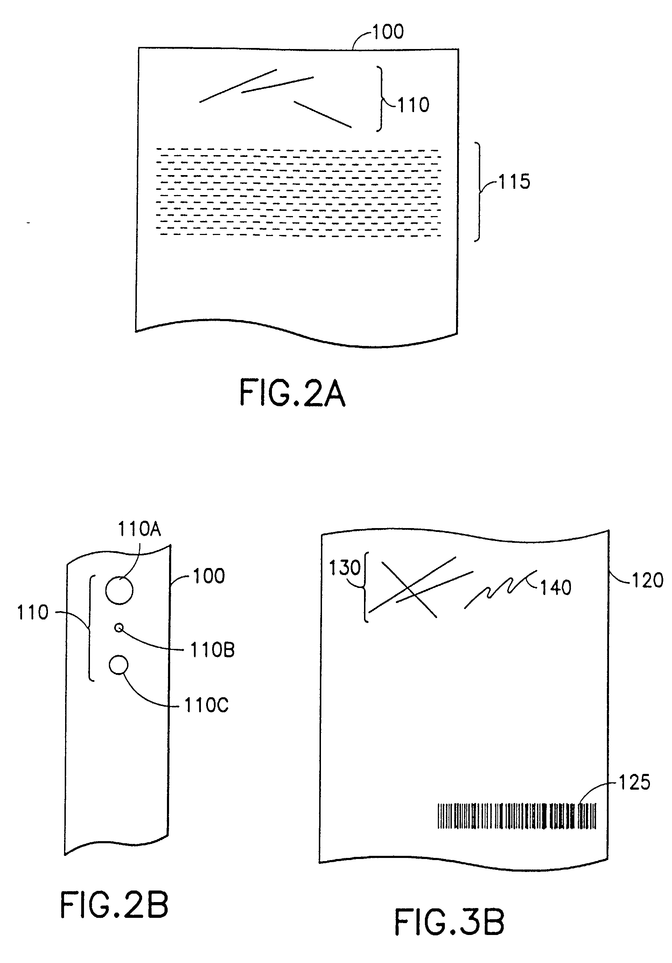

Figure 2A shows an example of a substrate 100 having a coding and authentication scheme in accordance with the invention. Several fibers 110 having the same length are embedded in the substrate 100. A magnified cross sectional view, as shown in Figure 2B, shows the fibers 110 as having different diameters. Fiber 110A has a larger diameter, fiber 110B has a smaller diameter, while fiber 110C has an intermediate diameter. Thus, the substrate can be coded by the numbers of each type of fiber per unit area. This information can then be utilized as at least part of the data input for a digital watermarking algorithm that generates a digital watermark 115 that is printed on the substrate.

Figure 3A shows a detailed view of digitally watermarked barcode 125 in accordance with the teachings of this invention. As mentioned above, a method for watermarking the barcode 125 could include regarding the barcode as an image and watermarking the barcode using a technique suitable for watermarking images. For example, the barcode could be treated as a pixelated two dimenional image and modified using a digital watermark. As such, the watermark may be incorporated as a digitally embedded imprint in the bit pattern or noise of a digital image of the barcode 125. As another aspect of this embodiment, the watermark may include additional information. This information may be related to an object which may be associated with the barcode. This information may include the date of manufacture, the country of origin, the authorized distribution channel, or any other information that may be informative or useful. This is advantageous in that the bar code may function as a conventional barcode, and may also carry additional information that may not be discernable without knowledge of the watermark and the ability to read the information included therein. This indiscernible information may be useful for various applications, for instance, the anti-diversion of branded products. As an example, the additional information could be incorporated into the UPC bar code of an item.

In another embodiment, the barcode 125 may function as a conventional barcode as mentioned above, or may be encoded such that failure to read or discern the digital watermark incorporated in the barcode may also prevent a reading of the barcode itself.

Figure 3B shows another example of a watermarking scheme in accordance with the teachings of the invention. A substrate 120 has a number of straight fibers 130 and a bent fiber 140 embedded within. The substrate is coded by the number of straight and bent fibers per unit area and the code has been used to digitally watermark a barcode 125 that is imprinted on substrate 120. In this example, the code is used as an input to the digital watermark algorithm used to generate the digitally watermarked barcode.

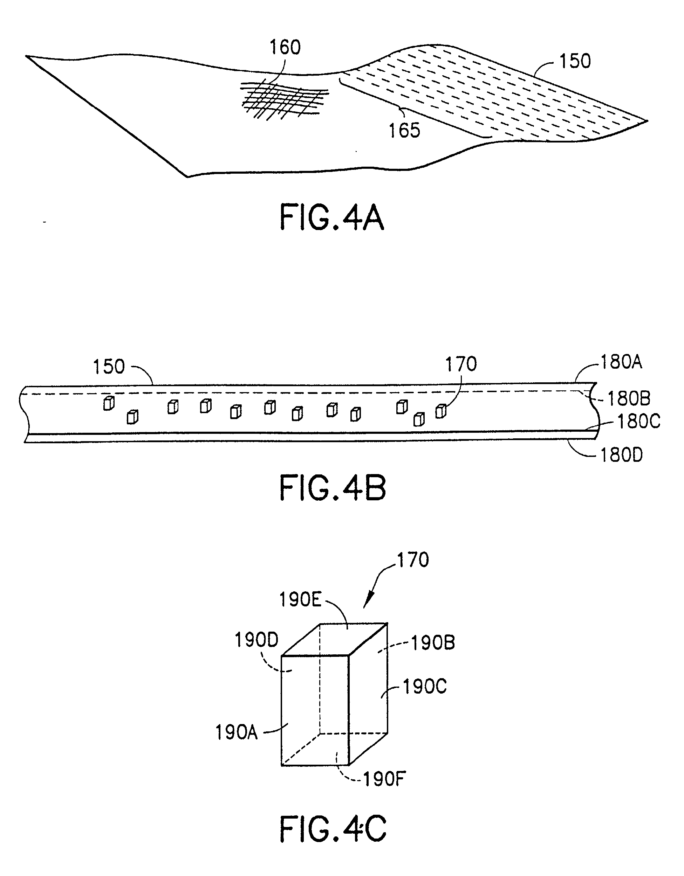

Figure 4A shows an example of coding and watermarking flat goods. One of a type of flat goods 150 is shown, in this example a towel, having an area 160 where particles 170 have been embedded in the towel. A magnified cross section of the towel 150 is shown in Figure 4B. The towel is preferably made up of layers 180, where one or more layers, for example 108B, 180C, are made of a mesh for retaining the particles 170. Alternatively, one of the layers 180 may be treated with a binding agent as described above for retaining the particles. Figure 4C shows a perspective view of one of the particles 170. The particle 170 preferably includes a characteristic color that may identify the origin of the towel 150. The particle may also include material that when exposed to a specific type of radiation, for example, UV light, fluoresces at a known wavelength, or within a known wavelength range. In addition, the opposing sides 190 of the particle preferably all have the same dimensions. In this example, opposing sides 190A, 190B, and 190C, 190D have dimensions that correspond to the dimensions of the towel 150. For example, where towel 150 may measure 40 inches by 60 inches, opposing sides 190A through 190D may measure 40 microns by 60 microns. Thus the physical attributes, that is the dimensions, of the taggant may be combined with semantic information about an object, in this example the dimensions of the object, to provide enhanced coding and authentication capabilities. The physical attributes of the taggant may then be used as at least part of a data input for a digital watermarking algorithm that generates a digital watermark 165 that maybe printed on, incorporated in, or otherwise used to label the substrate.

It should be understood that the shapes of the particles are not limited to a rectangular geometry or any other particular shape. For example, a spherical particle could also be used, as could an elliptically shaped particle.

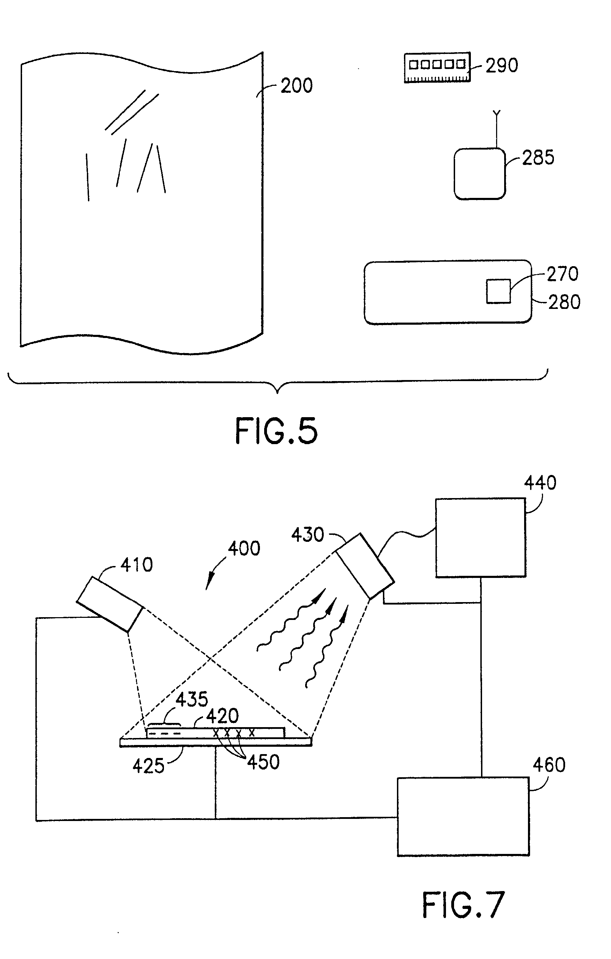

Figure 5 shows yet another example of a coding and authentication scheme. An unprinted document substrate 200 preferably contains a code that is derived from taggants incorporated into the substrate, for example, five unique wavelength categories of fluorescence (F) and 3 fiber lengths (L) creating L^{F}, or 3⁵ combinations or 243 codes. The particular code of this substrate is then input as one or one of many other data inputs into a digital watermarking algorithm or digital signature that respectively digitally watermarks or digitally signs the printed information to be placed on the substrate. This additional step thereby connects the physical substrate characteristics, e.g., size shape and fluorescence of taggants in the substrate, and its derived code with the printed information (or image) on the document. The digital watermark or signature information may be incorporated into the document, or in another embodiment, may be kept separate from the document. For example, the digital signature may be incorporated into an integrated circuit 270 as part of a smart card 280, which could be used to authenticate the document. As a further embodiment, the substrate code could be encoded in a radio frequency identification device 285, or may be included as information in a semiconductor device 290, for example a memory device or other type of integrated circuit. The information in these devices may then be used as an input to a digital watermark and/or as a key to access information included in a digital watermark.

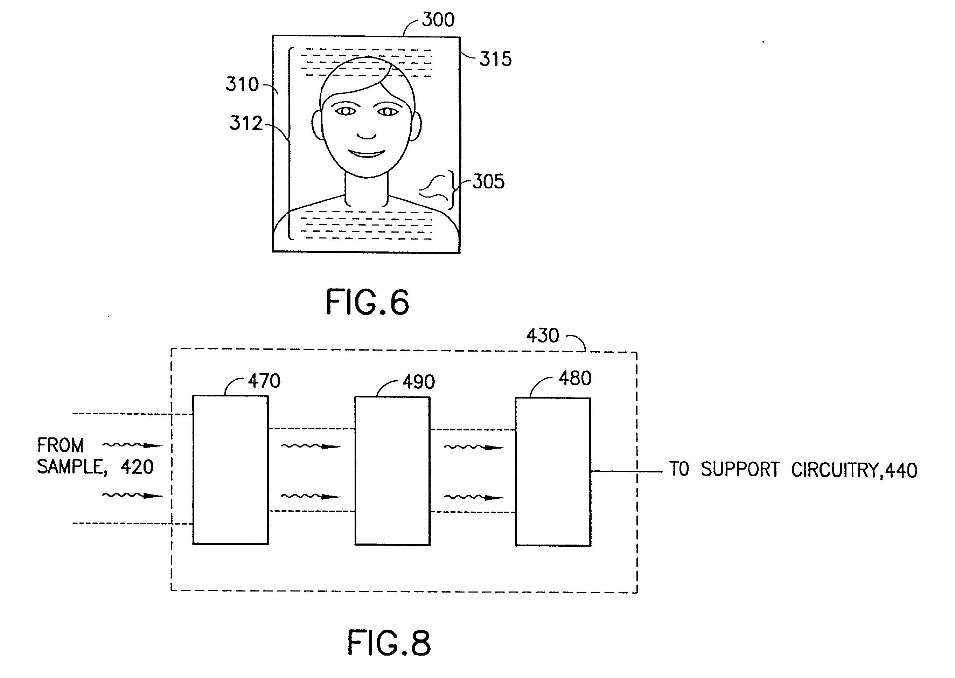

Figure 6 shows another example of a coding and authentication scheme according to the invention. A digital passport photo 300 includes taggants 305, a substrate 315, and a photo 310 including a digital watermark 312. In one embodiment the physical attributes of the taggants, represented as a code, for example R, 50, S (red emission, 50 micron fiber, straight) are used as one of the inputs for creating the digital watermark. In another embodiment, the physical attributes of the taggants 305 represented by the code R, 50, S are used as a key, or as part of an input into a key generating algorithm, where the key is used to unlock, decrypt, or otherwise retrieve information encoded in the digital watermark 312.

The decoding or identification of a code employs imaging of the taggants, as well as the detection of fluorescent emission or color if present. This can be achieved, for example, by using a microscope system coupled to a monolithic spectrometer. Another embodiment may use a narrow band filtered detection system including CCD camera based devices. This can be done directly on the object if it is easily manipulated or flat, such as a document, or by removing a number of the taggants and inspecting the particles.

A detection system 400 in accordance with the invention is shown in Figure 7. A source of radiation 410 is directed on an item 420 to be examined. The source 410 preferably generates UV radiation, but may generate any type of radiation that is suitable for detecting the coding scheme included with the item 420 and/or a watermark 435 or any appropriate attributes of the item 420. The item 420 may be mounted on a positioning device 425 in order to locate the item 420 for irradiation. The positioning device may include a conveyor or any other type of device suitable for transporting or locating the substrate for irradiation. A detector array 430, such as a CCD, a camera which may be fixed, moveable or handheld, or any suitable detection device, with appropriate support circuitry 440 detects an image of the taggants 450 and the watermark 435 in the item 420. The source 410 and detector array 430 may also comprise positioning devices (not shown) for locating these devices for optimum performance. In response to being irradiated by the source 410, the taggants 450 in the item 420 may also emit one or more wavelengths associated with the coding scheme. The detector array 430 is preferably capable of detecting the spectral content of any emissions, in addition to any other physical characteristics of the taggants 450, the watermark 435 or the item 420 for identification of the coding scheme and authentication of the item 420. Control circuitry 460 directs the activity of the overall system 400, and in particular controls the source 410, positioning device 425, detector array 430 and support circuitry 440.

As shown in Figure 8, the detector array 430 is preferably comprised of an optical section 470 for focusing received emissions within the detector array 430, an array of sensors 480 for detecting the emissions, and a filter section 490 for allowing only the frequencies of interest to impinge on the sensors 480. The optical section 470 may include a microscope system or any other system suitable for magnifying or otherwise focusing the image of the item 420 and/or any emissions from the item 420 within the detector array 430. The sensor array 480 may comprise any array of sensors suitable for detecting the emissions and/or physical characteristics of the item 420, for example, a diode array, a CCD array, etc. Using this technique the output of the detector array 430 is analyzed to detect the characteristics of the watermark 435, and the various sizes and/or shapes of the taggants so as to derive the encoded information therefrom, either alone or in combination with the emitted wavelength(s).

Although described above in the context of specific substrates, coding mechanism lengths, diameters, shapes, colors, and the like, those skilled in the art should appreciate that these are exemplary and indicative of presently preferred embodiments of these teachings, and are not intended to be read or construed in a limiting sense upon these teachings.

It can be appreciated that the techniques and structures described above are useful for authenticating objects based on coding mechanisms and watermarks included in the object. It can also be appreciated that by selecting certain coding schemes described above when constructing items, that the techniques and structures disclosed herein are also useful for encoding various types of information into objects, and authenticating those objects, such as valuables, negotiable instruments, works of art, currency, various types of substrates, items that may require sorting, items that are traveling on a conveyor system, etc.

Furthermore, it can be realized that the use of taggants and the like provide enhanced security, as their presence is a first indication that the article is genuine, and their presence in the correct sizes shapes, colors, etc. is a further indication that the article is genuine. It can thus be appreciated that while the invention has been particularly shown and described with respect to preferred embodiments thereof, it will be understood by those skilled in the art that changes in form and details may be made therein without departing from the scope and spirit of the invention.

## Claims

1. A method of identifying an object, comprising the steps of:
encoding an object by utilizing discernable physical attributes for encoding information regarding said object; and
utilizing said encoded information as at least one element for composing a digital watermark for said object.

2. The method of claim 1, wherein said physical attributes further comprise a set of taggants in association with said object, wherein said set of taggants is comprised of members having discernable physical attributes predetermined for encoding information regarding said object.

3. The method of claim 1, wherein said physical attributes comprise at least one of size and shape.

4. The method of claim 1, wherein said physical attributes comprise at least one of color and emission wavelength.

5. The method of claim 1, wherein said physical attributes comprise loading factor.

6. The method of claim 1, wherein said physical attributes comprise at least one of a radio frequency and a response to a radio frequency.

7. The method of claim 1, wherein said physical attributes comprise at least one of a magnetic field and a response to a magnetic field.

8. The method of claim 1, wherein said physical attributes are related to one or more dimensions of said object.

9. The method of claim 1, further comprising the steps of:
detecting said encoded information in said digital watermark; and
authenticating said object by comparing said encoded information with said discernable physical attributes of said object.

10. A method of identifying an object, comprising the steps of:
digitally watermarking a barcode; and
associating said digitally watermarked barcode with said object.

11. The method of claim 10, further comprising encoding additional information into said digitally watermarked barcode.

12. The method of claim 11, wherein said additional information further comprises at least one of a date of manufacture, a country of origin, and an authorized distribution channel.

13. The method of claim 11, wherein said additional information is retrieved from said digitally watermarked barcode by use of a key.

14. The method of claim 10 further comprising encoding a key in said digitally watermarked barcode such that failure to read a digital watermark in said digitally watermarked barcode results in an inability to read said barcode.

15. A method of identifying an object, comprising the steps of:
encoding an object by utilizing discernable physical attributes for encoding information regarding said object; and
utilizing said encoded information as a key to retrieve data encoded in a digital watermark associated with said object.

16. The method of claim 15, further comprising the step of authenticating said object by utilizing said data encoded in said digital watermark.

17. The method of claim 15, wherein said physical attributes further comprise a set of taggants in association with said object, wherein said set of taggants is comprised of members having discernable physical attributes predetermined for encoding information regarding said object.

18. A method of identifying an object, comprising the steps of:
encoding an object by utilizing discernable physical attributes for encoding information regarding said object; and
utilizing said encoded information as at least one element for composing a digitally watermarked barcode for said object.

19. The method of claim 18 further comprising encoding a key in said digitally watermarked barcode such that failure to read a digital watermark in said digitally watermarked barcode results in an inability to read said barcode.

20. The method of claim 18, wherein said physical attributes further comprise a set of taggants in association with said object, wherein said set of taggants is comprised of members having discernable physical attributes predetermined for encoding information regarding said object.

21. The method of claim 20, further comprising the step of utilizing said encoded information as a key to read a digital watermark in said digitally watermarked barcode.

22. The method of claim 18, wherein said physical attributes comprise at least one of size and shape.

23. The method of claim 18, wherein said physical attributes comprise at least one of color and emission wavelength.

24. The method of claim 18, wherein said physical attributes comprise loading factor.

25. The method of claim 18 wherein said physical attributes comprise at least one of a radio frequency and a response to a radio frequency.

26. The method of claim 18 wherein said physical attributes comprise at least one of a magnetic field and a response to a magnetic field.

27. The method of claim 18, wherein said physical attributes are related to one or more dimensions of said object.

28. An apparatus for identifying or authenticating an object, comprising:
a detector for detecting physical attributes and a watermark associated with said object; and
a decoder for decoding information encoded by said physical attributes and information included in said watermark for at least one of identifying or authenticating said object.

29. The apparatus of claim 28, wherein said physical attributes associated with said object further comprise a set of taggants in association with said object, wherein said set of taggants is comprised of members having discernable physical attributes predetermined for encoding information regarding said object.

30. The apparatus of claim 29, further comprising a source for illuminating said set of taggants, wherein said detector comprises means for detecting at least one emission wavelength in response to the illumination.
